# FASCICULE DE BREVET EUROPEEN

(11) **EP 4 573 467 B1**
(45) Date de publication et mention de la délivrance du brevet: **10.06.2026**
(21) Numéro de dépôt: 23772290.5
(22) Date de dépôt: 18.08.2023
(51) Int. Cl.: G06F 21/31

(54) **PROCEDE ET DISPOSITIF D'AUTHENTIFICATION BIOMETRIQUE COMPORTEMENTALE**
VERFAHREN UND VORRICHTUNG ZUR VERHALTENSBEZOGENEN BIOMETRISCHEN AUTHENTIFIZIERUNG
METHOD AND DEVICE FOR BEHAVIOURAL BIOMETRIC AUTHENTICATION

(30) Priorité: 19.08.2022 FR 2208401
(43) Date de publication de la demande: 25.06.2025
(73) Titulaire: Worldline, 92800 Puteaux (FR)
(72) Inventeur: LEFEVRE, Pierrick, 59139 Wattignies (FR); ELLOUMI, Wael, 41000 Blois (FR); VIEREN, Frédéric, 62750 Loos en Gohelle (FR); LOPEZ, Benjamin, 59113 Seclin (FR)
(74) Mandataire: Novagraaf Technologies
(86) Numéro de dépôt international: PCT/FR2023/051278
(87) Numéro de publication internationale: WO 2024/038239

(56) Documents cités:
- WO-A1-2017/196609
- CN-A- 107 872 436
- CN-B- 106 039 711

## Description

### Domaine technique

La présente description concerne un procédé et dispositif d'authentification biométrique comportementale.

### Arrière-plan technique

Dans le contexte de jeux vidéo, des mots de passe sont utilisés pour sécuriser les comptes d'utilisateurs sur les consoles de jeux : de nombreux utilisateurs utilisent des mots de passe pour protéger leurs comptes contre l'accès d'autres personnes (que ce soit par exemple des amis ou des membres de la famille). Pour saisir un mot de passe, un utilisateur doit en général actionner un clavier virtuel sur un écran (télévision par exemple) en naviguant avec leur console de jeu.

Lorsqu'un paiement est nécessaire, les utilisateurs peuvent enregistrer leurs informations de paiement dans leur compte et définir un mot de passe, qui peut être celui du compte ou être propre aux transactions de paiement pour ajouter une couche de sécurité supplémentaire lors du paiement (en cas de vol de la console ou aussi pour empêcher d'autres personnes d'acheter des jeux à partir de leur compte). Une telle mesure peut introduire des interruptions ou discontinuités dans le jeu vidéo pour les utilisateurs lorsqu'ils tentent de valider une transaction. De plus, les utilisateurs ne peuvent toujours pas empêcher le paiement si d'autres personnes parviennent à obtenir leurs mots de passe.

En outre une authentification forte peut être requise pour les paiements sur une plateforme numérique associée au jeu vidéo: l'authentification forte peut entraîner des « frictions », interruptions ou discontinuités indésirables pour les utilisateurs lorsqu'ils effectuent des paiements via la plateforme car la plupart du temps les utilisateurs auront besoin d'utiliser un autre appareil (par exemple un téléphone mobile) pour finaliser l'authentification et valider la transaction.

Il apparaît ainsi un besoin pour une solution d'authentification forte qui soit adaptée aux jeux vidéo ou à d'autres contextes applicatifs nécessitant une authentification forte pouvant être requise à tout moment pendant l'interaction de l'utilisateur avec un système applicatif donné.

Le document de l'art antérieur CN107872436-A divulgue une méthode d'identification d'un utilisateur dans lequel une pluralité de caractéristiques d'un comportement de l'utilisateur est utilisée pour l'identification de ce dernier.

### Résumé

L'étendue de la protection est définie par les revendications.

Selon un premier aspect, la présente description concerne un procédé d'authentification biométrique comportementale d'un utilisateur interagissant avec un système applicatif au moyen d'au moins un équipement d'interaction. Le procédé comprend
- une obtention de modèles biométriques comportementaux d'utilisateurs de référence ;
- une obtention d'un modèle biométrique comportemental d'un utilisateur légitime, le modèle biométrique comportemental d'un utilisateur légitime, respectivement d'un utilisateur de référence, étant configuré pour recevoir en entrée des valeurs de paramètres caractéristiques du comportement de l'utilisateur considéré lors d'actions d'interaction avec l'équipement d'interaction et générer en sortie un score représentatif d'une probabilité que le comportement représenté par les valeurs de paramètres caractéristiques d'entrée soit celui de l'utilisateur considéré;
- une obtention de valeurs de paramètres caractéristiques du comportement de l'utilisateur déterminées à partir d'événements produits par des actions d'interaction de l'utilisateur avec l'équipement d'interaction;
- une détermination d'un premier score par application du modèle biométrique comportemental de l'utilisateur légitime aux valeurs des paramètres caractéristiques ;
- une détermination de deuxièmes scores par application respectivement de chacun des modèles biométriques comportementaux des utilisateurs de référence aux valeurs des paramètres caractéristiques ;
- une détermination d'une décision d'authentification de l'utilisateur comme étant l'utilisateur légitime sur la base du premier score et des deuxièmes scores.

Selon un ou plusieurs modes de réalisation, le premier score représente une probabilité que l'utilisateur soit l'utilisateur légitime.

Selon un ou plusieurs modes de réalisation, chaque deuxième score représente une probabilité que l'utilisateur soit un utilisateur de référence associé au modèle comportemental utilisé pour générer le score concerné.

Selon un ou plusieurs modes de réalisation, les étapes de détermination du premier score, des seconds scores et de la décision d'authentification sont répétées pour des valeurs de paramètres caractéristiques obtenues respectivement pour une succession temporelle d'intervalles de temps, le procédé comprenant
- une mise à jour de la valeur courante d'un poids pour chaque intervalle de temps, le poids étant décrémenté si un des seconds scores obtenus pour cet intervalle de temps est supérieur à un seuil d'authentification, le poids étant incrémenté si le premier score obtenu pour cet intervalle de temps est supérieur au seuil d'authentification ;
- le premier score obtenu pour un intervalle de temps étant modifié par ajout de la valeur courante du poids après mise à jour pour cet intervalle de temps, le premier score modifié étant utilisé pour la détermination de la décision d'authentification.

Selon un ou plusieurs modes de réalisation,
- la décision d'authentification est négative si le premier score est inférieur à un seuil d'authentification ;
- la décision d'authentification est négative si le premier score est supérieur à un seuil d'authentification et qu'au moins un des deuxièmes scores est supérieur au seuil d'authentification ; et
- la décision d'authentification est positive si le premier score est supérieur à un seuil d'authentification et que tous les deuxièmes scores sont inférieurs au seuil d'authentification.

Selon un ou plusieurs modes de réalisation,
- la décision d'authentification est négative si le premier score est inférieur à un seuil d'authentification ;
- la décision d'authentification est positive si le premier score est supérieur à un seuil d'authentification et que moins de N seconds scores sont supérieurs au seuil d'authentification ;
- la décision d'authentification est négative si le premier score est supérieur à un seuil d'authentification et qu'au moins N seconds scores ou plus sont supérieurs au seuil d'authentification.

Selon un ou plusieurs modes de réalisation N est un entier strictement supérieur à 1 et inférieur ou égal à 10.

Selon un ou plusieurs modes de réalisation, les utilisateurs de référence sont des utilisateurs différents de l'utilisateur légitime.

Selon un ou plusieurs modes de réalisation, les modèles comportementaux des utilisateurs de référence sont les modèles comportementaux les plus discriminants parmi un ensemble de modèles comportementaux d'utilisateurs de référence.

Selon un ou plusieurs modes de réalisation, le système applicatif est un système de jeux vidéo.

Selon un deuxième aspect la présente description concerne un dispositif comprenant des moyens de mise en oeuvre d'un procédé selon le premier aspect.

Les moyens peuvent être des moyens logiciels et/ou matériels. Les moyens peuvent comprendre par exemple un ou plusieurs circuits configurés pour exécuter une ou plusieurs ou toutes les étapes du procédé selon le premier aspect. Les moyens peuvent comprendre par exemple au moins un processeur et au moins une mémoire comprenant des instructions de programme configurées pour, lorsqu'elles sont exécutées par le processeur, causer l'exécution par le dispositif d'une ou plusieurs ou toutes les étapes du procédé selon le premier aspect.

Selon un autre aspect, la présente description concerne un support d'enregistrement lisible par un processeur de données sur lequel est enregistré un programme comprenant des instructions de programme configurées pour causer l'exécution par le processeur de données d'une ou plusieurs ou toutes les étapes du procédé selon le premier aspect. Selon un autre aspect, la présente description concerne un programme d'ordinateur comportant des instructions de programme configurées pour causer l'exécution par un processeur de données d'une ou plusieurs ou toutes les étapes du procédé selon le premier aspect.

### Brève description des figures

D'autres caractéristiques et avantages résulteront de la description détaillée qui va suivre, effectuée sur la base de modes de réalisation et d'exemples donnés à titre illustratif et non limitatif, en faisant référence aux figures annexées.
[Fig.1] présente un schéma bloc illustrant une phase de constitution de modèles comportementaux de référence selon un exemple de réalisation.
[Fig.2] présente un schéma bloc illustrant une phase d'enrôlement d'un ou plusieurs utilisateurs légitimes selon un exemple de réalisation.
[Fig.3] présente un schéma bloc illustrant une phase d'authentification d'un utilisateur selon un exemple de réalisation.
[Fig.4] présente un schéma bloc illustrant une phase de mise à jour du gabarit biométrique d'un utilisateur légitime selon un exemple de réalisation.
[Fig.5] représente un organigramme d'un procédé d'authentification biométrique comportementale selon un exemple de réalisation.
[Fig.6] représente de manière schématique un système incluant un dispositif d'authentification biométrique comportementale selon un exemple de réalisation.
[Fig.7] est un diagramme montrant les performances d'un procédé d'authentification biométrique comportementale selon un exemple de réalisation.
[Fig.8] est un diagramme montrant les performances d'un procédé d'authentification biométrique comportementale selon un exemple de réalisation.

### Description détaillée

Divers exemples de réalisation vont maintenant être décrits plus en détail en référence aux dessins. Toutefois, les détails structurels et/ou fonctionnels spécifiques divulgués ici sont utilisés pour permettre une compréhension des différents modes de réalisation possibles. Cependant, la personne du métier comprendra que les exemples de réalisation peuvent subir diverses modifications et peuvent être mis en oeuvre sans tous ces détails. La présente description concerne un procédé et dispositif d'authentification biométrique comportementale transparent permettant de fluidifier les étapes d'authentification, de simplifier l'expérience utilisateur, de permettre une expérience « sans couture » (« frictionless » selon la terminologie anglo-saxonne) et la validation de transactions tout en garantissant un niveau de sécurité élevé.

Ce procédé permet également d'authentifier durant une expérience utilisateur que l'utilisateur est bien l'utilisateur légitime et qu'il n'est pas suppléé ou aidé par des moyens de triche, c'est-à-dire que l'utilisateur légitime n'est pas un utilisateur tricheur ou « cheater » en anglais.

Ce système d'authentification est basé sur les données comportementales biométriques collectées lors des interactions de l'utilisateur avec un système applicatif. A partir de ces données comportementales biométriques sont entrainés par apprentissage (« Machine Learning ») des modèles comportementaux d'utilisateurs de référence, notamment des utilisateurs différents de l'utilisateur légitime.

La biométrie comportementale repose sur l'analyse de caractéristiques comportementales d'une personne, par exemple la façon dont une personne interagit avec un appareil ou système. La biométrie comportementale se différencie de la biométrie physiologique, qui se fonde sur les particularités physiques de l'individu: les empreintes digitales, le visage, la voix, et les yeux, etc. La biométrie comportementale repose sur des paramètres de comportement propres à chaque individu, tels que rythme de frappe sur un clavier, pression sur des touches ou boutons d'un clavier, déplacement de la souris, la gestuelle, etc. La biométrie comportementale examine par exemple les schémas ou propriétés propres aux mouvements d'une personne pour permettre une comparaison avec un comportement passé et une authentification et/ou identification. Un modèle comportemental d'un utilisateur est configuré pour recevoir en entrée des valeurs de paramètres caractéristiques du comportement de cet utilisateur et générer en sortie un score.

Le comportement de l'utilisateur concerne ici les actions d'interaction (notamment des gestes effectués au moyen d'un ou plusieurs éléments d'interaction) effectuées par cet utilisateur.

Le score est représentatif d'une probabilité que le comportement représenté par les valeurs de paramètres caractéristiques d'entrée soit celui de l'utilisateur associé au modèle comportemental. La valeur de ce score peut être normalisée, par exemple comprise entre 0 et 1. Par convention, on convient dans ce document que plus le score a une valeur élevée, plus la probabilité est élevée.

Les scores obtenus à partir des modèles biométriques comportementaux associés aux différents utilisateurs permettent ainsi une discrimination entre utilisateurs. Cette discrimination sur la base des scores est rendue d'autant plus performante que les utilisateurs de référence ont eux-mêmes des comportements discriminants les uns par rapport aux autres.

La solution est peu coûteuse en ce qu'elle utilise uniquement les données comportementales produites par l'action d'un utilisateur sur un ou des équipements d'interactions (comprenant différents éléments d'interaction tels que bouton(s), molette(s), joystick, souris, écran tactile, etc) lors de l'interaction avec le système applicatif et ne nécessite pas de capteurs additionnels ou mesures additionnelles.

Ce procédé et dispositif est utilisable notamment pour des jeux vidéo dans le cas desquels les données comportementales biométriques peuvent être collectées lors de sessions de jeu de l'utilisateur à partir des données comportementales brutes produites par la console de jeu (boutons et/ou manette) suite aux actions de l'utilisateur.

Le dispositif d'authentification permet une authentification continue de l'utilisateur, par exemple tout au long d'une session d'interaction. Dans le contexte du jeu vidéo, cette authentification peut être réalisée tout au long d'une partie de jeu vidéo. Elle ne nécessite pas d'interruption dans l'interaction avec le système applicatif. L'authentification est transparente pour l'utilisateur, ne nécessitant pas d'actions spécifiques de l'utilisateur. Le niveau d'authentification est celui d'une authentification forte.

Les données comportementales collectées sont par exemple celles générées par une interface utilisateur, par exemple un équipement d'interaction, un équipement de commande ou une table de commande. Dans le cas d'un jeu vidéo, il peut s'agir d'une console de jeu incluant un clavier et/ou une manette ou joystick ou d'autres éléments d'interaction. Les données comportementales incluent typiquement des informations sur les actions (notamment appuis et les relâchements) effectuées au moyen des différents éléments d'interaction. Il n'est pas nécessaire d'utiliser des capteurs spécifiques comme par exemple un accéléromètre ou un gyroscope. Dans le cas où des capteurs sont disponibles sur la console de jeu (accéléromètre, gyroscope, etc.), ces derniers peuvent être utilisés pour enrichir les données comportementales de l'utilisateur mais ne sont en aucun cas indispensables pour l'authentification.

Le procédé d'authentification comporte principalement 4 phases :
- Une phase 1 de génération de modèles biométriques comportementaux de référence pour des utilisateurs de référence;
- Une phase 2 d'enrôlement d'un ou plusieurs utilisateurs légitimes comprenant l'entraînement d'un modèle biométrique comportemental pour ces utilisateurs légitimes ;
- Une phase 3 au cours de laquelle le modèle biométrique comportemental entraîné d'un utilisateur est utilisé pour effectuer une authentification en continu pendant une interaction avec un système applicatif ;

- Une phase 4 au cours de laquelle le gabarit biométrique d'un utilisateur légitime peut être mis à jour avec des données comportementales acquises pendant la phase 3. Dans la présente description on parlera indifféremment de modèle comportemental, de modèle biométrique comportemental pour désigner un modèle biométrique de comportement d'un utilisateur donné, qu'il soit entraîné ou non. On utilisera le terme de gabarit biométrique pour désigner le modèle biométrique comportemental entraîné.

Les utilisateurs de référence peuvent être des utilisateurs quelconques et ou des utilisateurs légitimes qui sont différents de l'utilisateur légitime cible (celui dont on veut entraîner le modèle ou que l'on veut authentifier).

Un utilisateur imposteur correspond à un utilisateur utilisant le compte utilisateur d'un autre utilisateur pour jouer. Dans le cadre de ce document, on s'intéresse au cas d'un utilisateur à authentifier, qui peut être un utilisateur imposteur cherchant à simuler le comportement du propriétaire du compte pour éviter d'être démasqué ou l'utilisateur légitime, propriétaire du compte utilisateur utilisé pour la session d'interaction. L'utilisateur à authentifier peut également être un utilisateur tricheur, utilisant différents moyens de triches permettant, par exemple dans un jeu vidéo, de modifier les règles du jeu pour obtenir un avantage déloyal lors d'une partie ou d'une expérience.

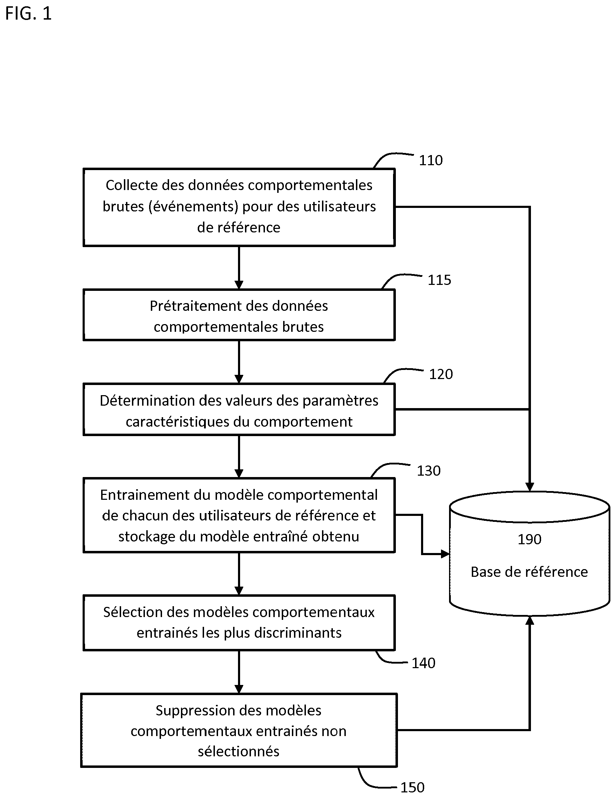

La Figure 1 présente un schéma bloc illustrant la phase 1 de constitution de modèles comportementaux de référence discriminants pour des utilisateurs de référence. Les modèles comportementaux de référence (plus précisément, les coefficients de ces modèles comportementaux de référence) sont stockés dans une base de données, nommée base de référence 190.

Cette base de référence 190 contient les données comportementales brutes acquises pour les utilisateurs de référence, les caractéristiques comportementales extraites de ces données brutes ainsi que les gabarits biométriques des utilisateurs de référence (plus précisément, les coefficients de ces gabarits biométriques de référence).

La phase de constitution de la base de référence 190 peut comprendre les étapes suivantes.

Lors de l'étape 110, des données comportementales brutes sont collectées lors des sessions de jeu réalisées par des utilisateurs quelconques dits utilisateurs de référence. Il peut s'agir d'utilisateurs légitimes disposant d'un compte et utilisant le système applicatif dans des conditions réelles.

Ces données comportementales brutes correspondent à un ensemble d'événements représentatifs des actions d'interaction avec le système applicatif (ici le jeu vidéo) réalisées par l'utilisateur au moyen d'un ou plusieurs équipements d'interaction (appelés ici également équipements d'interface utilisateur).

Ces actions d'interaction génèrent des données d'entrées pour le système applicatif via une interface utilisateur de ce système applicatif. Les données comportementales brutes peuvent être collectées soit pendant un intervalle de temps de durée prédéfinie, soit de sorte à obtenir un nombre minimal d'événements (par exemple, 200, 300, 500 événements).

Ces événements correspondent par exemples aux appuis et relâchements des différents boutons, aux mouvements réalisés avec le joystick ou une molette, etc.

Une action d'interaction sur un bouton peut être un appui de bouton ou un relâchement de bouton, un double appui, etc. Une action d'interaction sur une manette, un trackball ou une molette peut être un appui, un relâchement, un mouvement ou changement de position (par exemple changement de l'axe de la manette ou une rotation du trackball ou de la molette), etc. Une action d'interaction sur un écran tactile peut être un appui avec un ou plusieurs doigts, un « tap » ou appui court, un mouvement de balayage, un mouvement de rotation, un mouvement de redimensionnement ou zoom avant / arrière, etc. Les actions d'interaction peuvent être faites avec une main, ou via un stylet ou un autre objet ou partie du corps.

Chaque événement peut être décrit par un ou plusieurs paramètres descriptifs. Par exemple pour chaque bouton, un appui de bouton peut être décrit par la durée de l'appui, la force de pression sur le bouton, le front montant ou descendant de la courbe de variation de la pression, un instant de début d'appui, un instant de relâchement d'appui, etc. Pour un joystick, on peut utiliser la position de départ, la position de relâchement, la distance parcourue, etc.

Pour une action d'interaction incluant un mouvement selon une trajectoire dans l'espace, les paramètres descriptifs du mouvement d'interaction peuvent inclure : un paramètre différentiel ou une dérivée (tel que vitesse ou accélération) déterminé pour le mouvement, une transformée de Fourrier, la durée du mouvement, l'amplitude spatiale du mouvement, le temps de réaction de l'utilisateur (le temps de réaction de l'utilisateur pouvant être par exemple un temps entre deux actions d'interaction, entre une instruction de jeu et une action d'interaction de l'utilisateur, entre une position de départ et une première action d'interaction), une ou plusieurs positions spatiales ou orientations spatiales de l'élément d'interaction, etc.

Les données comportementales brutes collectées peuvent être subir un prétraitement lors d'une étape 115 (comprenant un nettoyage typiquement, par exemple par élimination de bruit ou données incohérentes). Les données comportementales brutes sont stockées dans la base de référence 190.

Lors de l'étape 120, afin de générer un gabarit biométrique propre à chaque utilisateur, les données comportementales brutes collectées ou éventuellement prétraitées lors de l'étape 115 sont analysées afin d'en extraire des valeurs de paramètres caractéristiques (« features » selon la terminologie anglosaxonne) du comportement de l'utilisateur. On parlera ici aussi de caractéristiques comportementales.

Un ou des paramètres caractéristiques peuvent inclure des paramètres descriptifs d'une ou plusieurs actions d'interaction et/ou des données comportementales brutes acquises pour un ou des éléments d'interaction. Un ou des paramètres caractéristiques peuvent être déterminés à partir de paramètres descriptifs d'une ou plusieurs actions d'interaction et/ou de données comportementales brutes acquises pour un ou des éléments d'interaction.

Ces paramètres caractéristiques sont par exemple des paramètres statistiques déterminés sur un intervalle de temps à partir d'un ou plusieurs paramètres descriptifs des événements détectés. Des exemples de paramètres statistiques incluent : minimum, maximum, moyenne, écart type ou variance, fréquence, périodicité, valeur médiane, etc. Ces paramètres caractéristiques sont déterminés pour chacun des intervalles de temps d'une succession d'intervalles de temps. Un intervalle de temps peut avoir une durée allant de 0.1 s à 3 s. Il est également possible de grouper les événements par séquences d'au moins N événements et de procéder à la détermination des valeurs des paramètres caractéristiques pour chaque séquence de sorte que les valeurs statistiques calculées pour les caractéristiques comportementales soient significatives. Par exemple, on calcule des valeurs des paramètres caractéristiques pour les N premiers événements, puis pour les N suivants, et ainsi de suite. Par exemple N=20, 30, 50, 100 est le nombre d'événements par séquence.

L'étape d'entraînement 130 suivante peut n'être réalisée que lorsqu'on a obtenu un nombre minimal G de séquences d'événements et les valeurs des paramètres caractéristiques correspondantes. Par exemple G= 5, 10, 20, 30, 50.

Les valeurs des paramètres caractéristiques ainsi obtenues sont stockées dans la base de référence 190.

Lors de l'étape 130, des gabarits biométriques des utilisateurs de référence sont générés par entraînement d'un modèle comportemental à partir des valeurs des paramètres caractéristiques obtenues à l'étape 120. Pour chaque utilisateur de référence, un gabarit biométrique (un modèle comportemental entraîné) propre à cet utilisateur de référence est généré en utilisant un algorithme d'apprentissage automatique (Machine Learning) pour l'entrainement du modèle. On désignera un modèle comportemental entraîné propre à un utilisateur de référence par 'modèle de référence'.

Un modèle comportemental d'un utilisateur est configuré pour recevoir en entrée des valeurs de paramètres caractéristiques et générer en sortie un score. Le score est représentatif d'une probabilité que le comportement représenté par les valeurs de paramètres caractéristiques d'entrée soit celui de l'utilisateur associé au modèle comportemental. La valeur de ce score peut être normalisée, par exemple comprise entre 0 et 1. Par convention, on convient dans ce document que plus le score a une valeur élevée pour la probabilité est élevée.

Différents types d'algorithme d'apprentissage automatique (supervisé, non supervisé, semi-supervisé, par renforcement, etc.) peuvent être utilisés pour générer un modèle comportemental : par exemple, un réseau de neurones, une forêt aléatoire (Random Forest), un algorithme de boosting (par exemple XGBoost, Extreme Gradient Boosting), une machine à vecteur de support (SVM, Suppport Vector Machine), un modèle de Markov caché (HMM, Hidden Markov Model), etc.

Ainsi différentes méthodes et modèles sont applicables pour déterminer dans quelle mesure un utilisateur à authentifier correspond à un utilisateur de référence et générer un score correspondant.

Les méthodes de calcul de score peuvent par exemple déterminer un ou plusieurs vecteurs de référence, comprenant des valeurs de paramètres représentatifs du comportement d'un utilisateur de référence et servant de gabarit biométrique pour cet utilisateur de référence, puis comparer ce(s) vecteur(s) de référence avec un vecteur courant, représentatif du comportement d'un utilisateur à authentifier. Le calcul du score peut être basé sur de tels vecteurs et un calcul de distance, un barycentre des vecteurs de référence, un calcul d'écart type, une classification et une comparaison d'étiquettes obtenues, un calcul de probabilité, etc.

Différentes méthodes d'entraînement peuvent être utilisées, par exemple : des méthodes supervisées dont les données sont étiquetées ou labellisées (classes connues), des méthodes non supervisées (données non labellisées), des méthodes semi-supervisées (données étiquetées et non étiquetées).

Dans l'exemple de la méthode supervisée ici utilisée, l'entrainement se fait avec des données de l'utilisateur légitime vérifiant l'hypothèse « l'utilisateur est légitime » et des données des utilisateurs de référence (différents de l'utilisateur légitime cible) vérifiant l'hypothèse inverse « l'utilisateur n'est pas légitime ». Les données de l'utilisateur légitime cible sont donc labélisées « légitime » et les données des utilisateurs de référence sont labelisées « non légitimes » afin d'entrainer le modèle à faire la différence entre les deux classes (le comportement de l'utilisateur légitime cible et celui d'un utilisateur inconnu) et prédire la bonne classe.

Lors de l'étape 140 une sélection des utilisateurs de référence est effectuée de sorte à ne retenir que des utilisateurs de référence dont le comportement est très discriminant vis-à-vis aux autres utilisateurs de référence qui sont stockés dans la base de référence 190. Différentes méthodes d'analyse statistiques sont utilisables dans ce but.

Cette sélection est réalisée par exemple à travers une analyse statistique avec une validation croisée, en mesurant à chaque fois les taux de faux positifs et de faux négatifs. Cette validation croisée peut consister à comparer les utilisateurs de référence 2 par 2, par exemple en calculant un score croisé pour un modèle comportemental d'un utilisateur A donné en fournissant en entrée de ce modèle comportemental des valeurs de paramètres caractéristiques obtenues pour un autre utilisateur B. On identifie ensuite les utilisateurs dont le modèle comportemental génère un taux de faux positifs (taux de score supérieur à un seuil) trop élevé et/ou ensuite les utilisateurs dont le score croisé est toujours inférieur à un seuil.

Lors de l'étape 150 on supprime de la base de référence 190 toutes les données des utilisateurs de référence dont le modèle comportemental n'est pas suffisamment discriminant de sorte que ces utilisateurs ne feront pas partie de la base définitive de référence (données comportementales brutes, paramètres caractéristiques du comportement et gabarits biométriques) qui sera utilisée notamment dans les phases 2 et 3 car leur comportement n'a pas été établi comme suffisamment discriminant lors de l'étape 140.

Les utilisateurs de référence sélectionnés ainsi peuvent être des utilisateurs quelconques et/ou des utilisateurs légitimes. Ce sont des utilisateurs ayant des modèles comportementaux peu sensibles et résistants aux comportements des utilisateurs imposteurs ou inconnus.

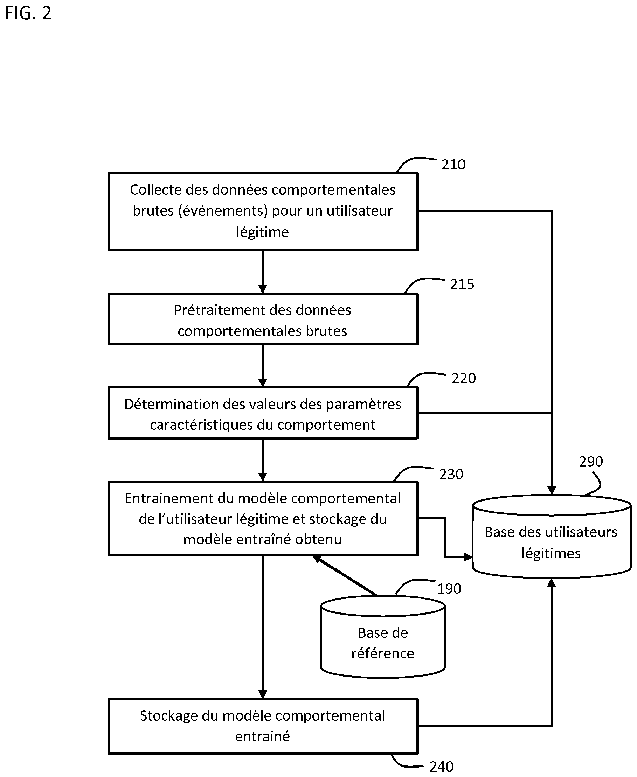

La Figure 2 présente un schéma bloc illustrant la phase 2 d'enrôlement d'un ou plusieurs utilisateurs légitimes. Cette phase comprend l'entraînement d'un modèle biométrique comportemental pour ces utilisateurs légitimes et la constitution d'une base de données des utilisateurs légitimes, appelées aussi base des utilisateurs légitimes 290.

Cette base des utilisateurs légitimes 290 comprend les données comportementales brutes acquises pour les utilisateurs légitimes, les valeurs des caractéristiques comportementales extraites de ces données brutes ainsi que les gabarits biométriques des utilisateurs légitimes (plus précisément, les coefficients de ces gabarits biométriques). Pour chaque utilisateur légitime, les étapes d'enrôlement peuvent inclure les étapes suivantes.

Lors de l'étape 210, des données comportementales brutes sont collectées lors des sessions de jeu réalisées par cet utilisateur légitime. Cette étape est semblable à l'étape 110 décrite plus haut mais est réalisée lors de sessions de jeu réalisées par cet utilisateur légitime.

Les données comportementales brutes collectées peuvent subir un prétraitement lors d'une étape 215, semblable à celui de l'étape 115. Les données comportementales brutes et prétraitées sont stockées dans la base des utilisateurs légitimes 290.

Lors de l'étape 220, afin de générer un gabarit biométrique propre à chaque utilisateur légitime, les données comportementales brutes collectées lors de l'étape 210 ou prétraitées obtenues à l'étape 215 sont analysées afin d'en extraire des valeurs de paramètres caractéristiques du comportement de cet utilisateur. Cette étape est semblable à l'étape 120 décrite plus haut pour les utilisateurs de référence, notamment les mêmes paramètres caractéristiques peuvent être utilisés que pour les utilisateurs de référence. Les valeurs de paramètres caractéristiques sont stockées dans la base des utilisateurs légitimes 290 pour être utilisées dans l'étape 230 mais aussi plus tard dans la phase 4 pour la mise à jour du gabarit biométrique de l'utilisateur légitime suite à une authentification réussie.

Lors de l'étape 230, un gabarit biométrique de l'utilisateur légitime est généré. Cette étape utilise les paramètres caractéristiques de l'utilisateur légitime, générées à l'étape précédente 220, mais aussi les paramètres caractéristiques des utilisateurs de référence obtenus à l'étape 120 et stockés dans la base des utilisateurs de référence 190. Les valeurs de paramètres caractéristiques des utilisateurs de référence de cette base constituent un ensemble réduit représentatif de comportements permettant un entraînement plus rapide qu'en utilisant des valeurs de paramètres caractéristiques pour tous les autres utilisateurs. Afin d'entraîner le modèle comportemental à différentier un utilisateur légitime cible concerné d'un autre utilisateur (que ce soit un autre utilisateur légitime, un imposteur ou utilisateur inconnu) et afin que les données d'entraînement soient équilibrées, autant de paramètres caractéristiques des utilisateurs de référence que des paramètres caractéristiques de l'utilisateur légitime sont utilisés pour l'entraînement du modèle de l'utilisateur légitime.

Le gabarit biométrique est obtenu par entrainement d'un modèle comportemental sur la base d'un algorithme d'apprentissage automatique (Machine Learning).

Le même type de modèle comportemental est utilisé pour les utilisateurs de référence et avec une même méthode d'entraînement sauf que le modèle comportemental d'un utilisateur de référence cible A est entraîné avec les paramètres caractéristiques de l'utilisateur de référence A (qui représentent la classe de l'utilisateur légitime) et les paramètres caractéristiques des autres utilisateurs de référence (qui représentent la classe des utilisateur illégitimes).

Lors de l'étape 240 le gabarit biométrique de l'utilisateur légitime est stocké dans la base des utilisateurs légitimes 290 afin d'être utilisé plus tard dans la phase 3 d'authentification.

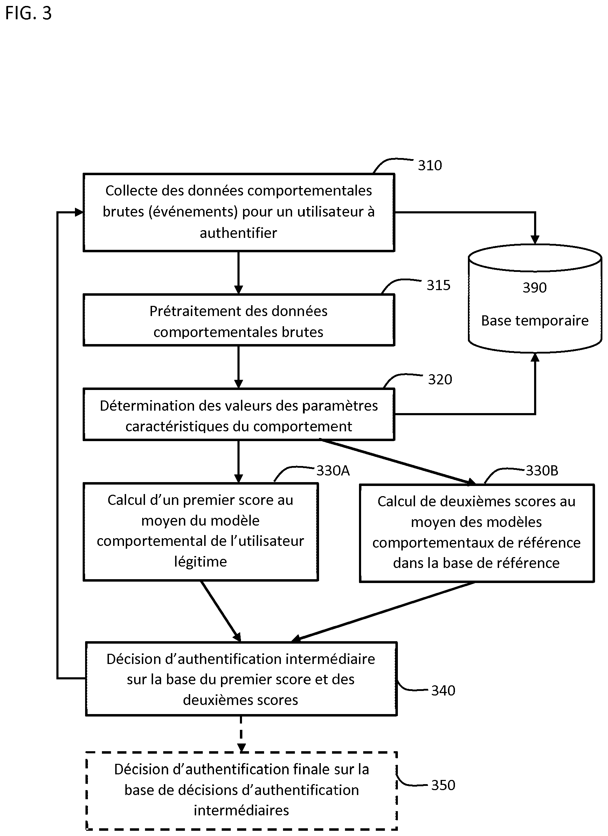

La Figure 3 présente un schéma bloc illustrant la phase 3 d'authentification d'un utilisateur. Cette phase vise à authentifier un utilisateur quelconque (légitime ou non) utilisant un compte utilisateur pour lequel un gabarit biométrique a été préalablement obtenu pour son propriétaire légitime lors de la phase 2.

L'utilisateur à authentifier peut donc être l'utilisateur légitime, c'est-à-dire le propriétaire du compte utilisateur utilisé. Il peut s'agir d'un utilisateur imposteur, utilisant de manière frauduleuse ce compte utilisateur et les éventuels moyens de paiement associés, de sorte par exemple à éviter de payer lui-même. Il peut s'agir aussi d'un utilisateur ayant obtenu (de manière frauduleuse ou non) les données de connexion à ce compte utilisateur et se servant de ce compte pour jouer, avec ou sans l'accord du propriétaire du compte utilisateur. Il peut s'agir en outre d'un utilisateur (par exemple un enfant ou un ami) qui ne dispose pas des données de connexion à un compte utilisateur mais qui, après connexion par le propriétaire du compte utilisateur, est autorisé à utiliser ce compte utilisateur pour jouer.

Cette authentification peut être effectuée en continu, tout au long de la session d'interaction avec le système applicatif (ici le jeu), par comparaison de son comportement biométrique avec celui de l'utilisateur légitime, qui est propriétaire du compte utilisateur via lequel l'utilisateur à authentifier interagit avec le système applicatif.

La phase 3 d'authentification d'un utilisateur peut comprendre les étapes suivantes.

Lors de l'étape 310, des données comportementales brutes sont collectées lors de l'interaction avec le système applicatif effectuée par l'utilisateur à authentifier. Cette étape est semblable à l'étape 110 décrite plus haut mais est réalisée lors de la session d'interaction courante.

Les données comportementales brutes collectées peuvent subir un prétraitement lors d'une étape 315, semblable à celui de l'étape 115. Les données comportementales brutes et prétraitées sont stockées dans une base de données temporaires, nommée également base temporaire 390.

Cette base temporaire 390 comprend les données comportementales brutes acquises pour les utilisateurs à authentifier et les valeurs des caractéristiques comportementales extraites de ces données brutes, ainsi que les valeurs des scores d'authentification obtenues sur la base de ces valeurs.

Lors de l'étape 320, les données comportementales brutes collectées lors de l'étape 310 ou prétraitées lors de l'étape 315 sont analysées afin d'en extraire des valeurs de paramètres caractéristiques du comportement de cet utilisateur. Cette étape est semblable à l'étape 120 décrite plus haut pour les utilisateurs de référence, notamment les mêmes paramètres caractéristiques peuvent être utilisés que pour les utilisateurs de référence. Les valeurs des paramètres caractéristiques sont stockées dans la base temporaire 390 pour être utilisées dans les étapes 330A, 330B, 340 suivantes mais aussi lors de la phase 4 pour la mise à jour du gabarit biométrique de l'utilisateur légitime en cas d'une authentification réussie avec un niveau de confiance suffisamment élevé à l'issue de la phase 3.

Lors d'une étape 330A, les valeurs des paramètres caractéristiques obtenues à l'étape 320 sont testées par rapport au gabarit biométrique obtenu lors de la phase 2 pour l'utilisateur légitime, propriétaire du compte utilisateur couramment utilisé. Dans ce but, les valeurs des paramètres caractéristiques sont fournies en entrée au gabarit biométrique de l'utilisateur légitime de sorte à obtenir un premier score en sortie. Ce premier score représente une probabilité que l'utilisateur à authentifier est l'utilisateur légitime.

Lors d'une étape 330B, les valeurs des paramètres caractéristiques obtenues à l'étape 320 sont testées par rapport au gabarit biométrique obtenu lors de la phase 1 pour chacun des utilisateurs de référence ayant les modèles comportementaux les plus discriminants sélectionnés à l'issue de l'étape 150. Dans ce but, les valeurs des paramètres caractéristiques sont fournies en entrée au gabarit biométrique de chaque utilisateur de référence de sorte à obtenir des scores en sortie. Chacun de ces scores (appelés ici également 'seconds scores' ou 'scores de référence') représente une probabilité que l'utilisateur à authentifier est l'utilisateur de référence associé au modèle comportemental utilisé pour générer le score.

Lors de l'étape 340, les scores obtenus respectivement aux étapes 330A et 330B sont analysés pour prendre une décision d'authentification, c'est-à-dire pour déterminer si l'utilisateur à authentifier est ou non l'utilisateur légitime. Différentes méthodes peuvent être utilisées pour combiner ces scores afin de prendre la décision d'authentification.

Un seuil d'authentification est défini pour l'ensemble des scores. Ce score peut être égal par exemple à 0,5 ou 0,6 ou 0,7 ou 0,75 ou 0,8. Le seuil d'authentification peut être fixé en fonction de plusieurs paramètres comme un niveau de sécurité souhaité, le niveau de risque associé avec une utilisation illégitime du compte d'un utilisateur, etc.

Si le premier score obtenu à l'étape 330A lors de la comparaison avec l'utilisateur légitime est inférieur au seuil d'authentification, le comportement est considéré comme différent de celui de l'utilisateur légitime et l'utilisateur à authentifier n'est pas reconnu comme étant l'utilisateur légitime (échec de l'authentification).

Si le premier score obtenu à l'étape 330A lors de la comparaison avec l'utilisateur légitime est supérieur au seuil d'authentification et qu'un ou plusieurs scores de référence obtenus à l'étape 330B lors des comparaisons avec les utilisateurs de référence sont supérieurs au seuil d'authentification, le comportement est considéré comme celui d'un utilisateur inconnu et l'utilisateur à authentifier n'est pas reconnu comme étant l'utilisateur légitime (échec de l'authentification).

Si le score de comparaison avec l'utilisateur légitime est supérieur au seuil d'authentification et qu'aucun des scores de référence obtenus à l'étape 330B lors des comparaisons avec les utilisateurs de référence n'est supérieur au seuil d'authentification, le comportement est considéré comme étant celui de l'utilisateur légitime et l'utilisateur à authentifier est reconnu comme étant l'utilisateur légitime (authentification réussie).

Les cas d'égalité d'un score avec le seuil d'authentification peuvent être traités comme les cas où le score est inférieur au seuil d'authentification ou comme les cas où le score est supérieur au seuil d'authentification.

En variante, on définit un nombre entier N strictement supérieur à 1, par exemple inférieur à 10 (par exemple N=2 ou 3 ou 5) et la décision d'authentification est prise comme suit :
- si le premier score obtenu à l'étape 330A est inférieur au seuil d'authentification, il y a échec de l'authentification;
- si le premier score est supérieur au seuil d'authentification et que moins de N scores de référence sont supérieurs au seuil d'authentification, l'authentification est réussie
- si le premier score de comparaison avec l'utilisateur légitime est supérieur au seuil d'authentification et que N scores de référence ou plus sont supérieurs au seuil d'authentification, il y a échec de l'authentification.

Les étapes 310 à 340 d'authentification d'un utilisateur peuvent être répétées en continu tout au long de la session d'interaction avec le système applicatif, par exemple de manière périodique, les valeurs de paramètres caractéristiques étant calculées dans ce cas pour un intervalle de temps de durée donnée et/ou pour un nombre minimum d'événements d'interaction détectés. Cela permet de disposer à tout moment pendant le déroulement d'une session d'interaction d'une décision d'authentification et de détecter un éventuel changement d'utilisateur pendant la session d'interaction.

Cette répétition permet en outre de détecter l'enchainement temporel de plusieurs décisions d'authentification positives (authentification réussie) d'affilée (sans intervalle de temps avec échec d'authentification) obtenues respectivement lors de plusieurs étapes 340 et de baser la décision d'authentification finale (étape 350) sur un ensemble de décisions d'authentification obtenues indépendamment pour des intervalles de temps distincts.

En basant la décision d'authentification finale à l'étape 350 sur plusieurs décisions d'authentification intermédiaires obtenues à l'étape 340, on peut fournir un niveau d'authentification plus fort, correspondant à un niveau de sécurité plus élevé si par exemple la décision d'authentification finale obtenue à l'étape 350 n'est positive à un instant donné que si toutes les décisions d'authentification intermédiaires obtenues pour des intervalles de temps compris dans une période de temps précédent cet instant sont également positives.

Cette répétition peut être également exploitée afin d'ajouter un mécanisme de bonus/malus qui vient modifier la prédiction courante sur un intervalle de temps donné en fonction des décisions d'authentification intermédiaires précédentes sur les intervalles de temps précédents.

Un poids P positif ou négatif est ajouté au score selon que l'on souhaite appliquer un bonus ou un malus. Ce poids P est mis à jour en continu pendant la session d'interaction en fonction des scores obtenus. Le poids est initialisé à 0 en début de session d'interaction. Il est également réinitialisé à 0 après un temps d'inactivité de l'utilisateur à authentifier. Le poids a une valeur minimale Pmin et une valeur maximale Pmax qu'il ne peut en aucun cas dépasser, par exemple Pmin= -0.5 et Pmax = 0.2.

Le mécanisme peut être le suivant pour chaque score d'authentification nouvellement obtenu à l'étape 330A pour un intervalle de temps donné :
- Si un des scores de référence est supérieur au seuil d'authentification, un incrément négatif (malus, égal par exemple à P1=-0.1) est appliqué au poids : P= P+P1 ;
- Sinon si le premier score produit par le modèle de l'utilisateur légitime est supérieur au seuil d'authentification, un incrément positif (bonus égal par exemple à P2=+0.01) est appliqué au poids : P= P+P2 ;

Le premier score obtenu pour un intervalle de temps donné à l'étape 330A est ainsi modifié par ajout de la valeur courante du poids pour obtenir le score utilisé pour la décision d'authentification à l'étape 340, ce score modifié étant comparé au seuil d'authentification.

Cela permet de rendre les prédictions à un moment donné plus précises en ajoutant, dans la prise de décision, les informations complémentaires liées aux données comportementales des prédictions précédentes.

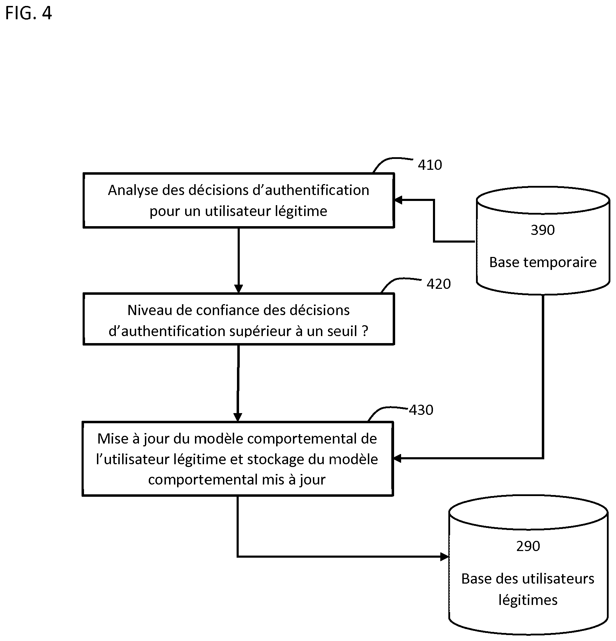

La Figure 4 présente un schéma bloc illustrant la phase 4 de la mise à jour du gabarit biométrique d'un utilisateur légitime.

Cette mise à jour du gabarit biométrique d'un utilisateur légitime est réalisée en cas d'authentification réussie avec un niveau de confiance suffisamment élevé lors de la phase 3 (décision d'authentification intermédiaire à l'étape 340 ou décision d'authentification finale à l'étape 350). Ceci permet de s'adapter à une éventuelle évolution du comportement de l'utilisateur légitime au cours du temps et d'avoir un gabarit biométrique très proche de son comportement. La phase de mise à jour du gabarit biométrique comportemental peut comprendre les étapes suivantes.

Lors de l'étape 410, à la fin de la session d'interaction (fin d'une session de jeu, par exemple), toutes les décisions d'authentification (intermédiaires et finales) obtenues lors de l'étape 340 et éventuellement de l'étape 350 sont stockées dans la base temporaire 390 et analysées.

Lors de l'étape 420, si le niveau de confiance des décisions d'authentification au cours de la session est suffisamment élevé (supérieur à un certain seuil fixé préalablement), les données stockées dans la base temporaire 390 (données collectées brutes et les valeurs des paramètres caractéristiques extraites) sont alors transférées vers la base des utilisateurs légitimes 290. Le niveau de confiance peut être évalué de différentes manières. Le niveau de confiance peut être égal au score d'authentification minimal produit par modèle de l'utilisateur légitime au cours de toute sa session. Le niveau de confiance est ensuite comparé à un seuil fixé préalablement pour déterminer si l'étape 430 est exécutée ou non.

Lors de l'étape 430, si la détermination à l'étape 420 est positive, la mise à jour du gabarit biométrique de l'utilisateur légitime est effectuée. Lors de cette étape 430, le gabarit biométrique de l'utilisateur légitime est recalculé en tenant compte des nouvelles valeurs des paramètres caractéristiques extraites qui viennent d'être ajoutées à son profil. Le modèle comportemental de l'utilisateur légitime est entièrement réentraîné comme à l'étape 230 mais en tenant compte des nouvelles valeurs des paramètres caractéristiques qui viennent d'être ajoutées à son profil. En alternative, on peut supprimer une partie des anciennes valeurs des paramètres caractéristiques (afin de garder que les données les plus récentes et éviter les problèmes de scalabilité et au stockage de grandes quantités de données) avant de réentraîner le modèle.

Dans le cadre de l'application de l'invention aux jeux vidéo, le comportement de l'utilisateur peut dépendre du jeu vidéo ou du type de jeu vidéo. Pour permettre une prédiction fiable, il est possible d'entraîner un modèle comportemental spécifique à chaque jeu vidéo ou chaque type de jeu vidéo. Le modèle comportemental spécifique est alors utilisé pour l'authentification d'un utilisateur légitime.

En outre, à partir d'un ou plusieurs modèles comportementaux spécifiques à un ou plusieurs jeux d'un utilisateur, un méta-modèle peut être généré pour un utilisateur donné qui peut servir de point de départ pour l'entraînement d'un nouveau modèle comportemental spécifique à un jeu donné. Pour générer ce méta-modèle, les données d'un utilisateur légitime collectées sur différents jeux sans distinction ainsi que ses données de navigation dans les menus des jeux et/ou de la console de jeu peuvent être utilisées ainsi que les données des utilisateurs de référence sur tous les jeux sans distinction avec leurs données de navigation en appliquant une des méthodes d'entrainement décrite précédemment.

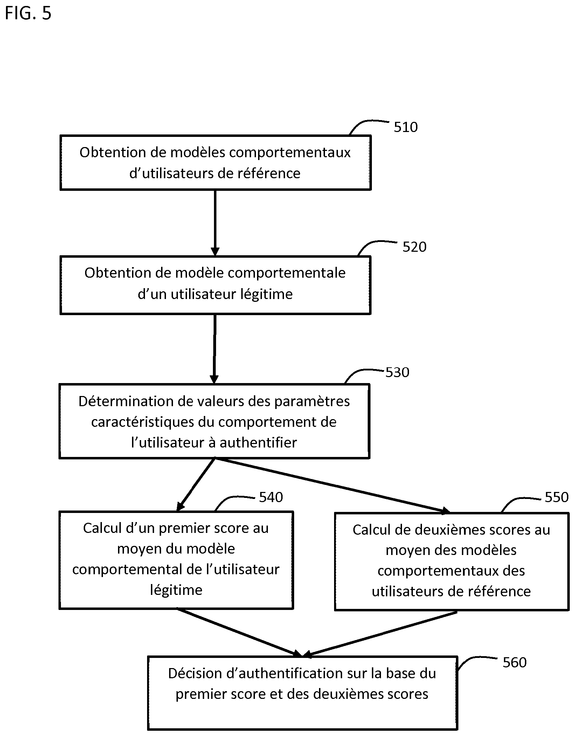

La Figure 5 représente un organigramme général d'un procédé d'authentification biométrique comportementale d'un utilisateur interagissant avec un système applicatif au moyen d'au moins un équipement d'interaction.

Le système applicatif est par exemple un système de jeux vidéo. Le procédé d'authentification biométrique comportementale peut être mis en oeuvre par un dispositif d'authentification biométrique comportementale correspondant comprenant des moyens de mise en oeuvre de ce procédé, ce dispositif étant interconnecté avec le système applicatif.

Lors d'une étape 510, des modèles comportementaux d'utilisateurs de référence sont obtenus. Les modèles comportementaux des utilisateurs de référence peuvent être les modèles comportementaux les plus discriminants parmi un ensemble de modèles comportementaux d'utilisateurs de référence. Les utilisateurs de référence sont par exemple des utilisateurs quelconques, différents de l'utilisateur légitime. Ces modèles comportementaux ou gabarits biométriques peuvent être obtenus comme décrit par référence à la Figure 1.

Lors d'une étape 520, un modèle comportemental d'un utilisateur légitime est obtenu. Ce modèle comportemental ou gabarit biométrique peut être obtenu comme décrit par référence à la Figure 2.

Lors d'une étape 530, des valeurs de paramètres caractéristiques du comportement de l'utilisateur calculées à partir d'événements produits par l'interaction de l'utilisateur avec l'équipement d'interaction sont obtenues. Ces valeurs de paramètres caractéristiques peuvent être obtenues comme décrit par référence à la Figure 3.

Lors d'une étape 540, un premier score est déterminé par application du modèle comportemental de l'utilisateur légitime aux valeurs des paramètres caractéristiques. Le premier score représente par exemple une probabilité que l'utilisateur soit l'utilisateur légitime.

Lors d'une étape 550, des deuxièmes scores sont déterminés par application de chacun des modèles comportementaux des utilisateurs de référence aux valeurs des paramètres caractéristiques. Chaque deuxième score peut représenter une probabilité que l'utilisateur soit l'utilisateur de référence associé au modèle comportemental utilisé pour générer le score concerné.

Lors d'une étape 560, une décision d'authentification de l'utilisateur comme étant l'utilisateur légitime est prise sur la base du premier score et des deuxièmes scores. La décision d'authentification peut être négative si le premier score est inférieur à un seuil d'authentification. La décision d'authentification peut être négative si le premier score est supérieur à un seuil d'authentification et qu'au moins un des deuxièmes scores est supérieur au seuil d'authentification. La décision d'authentification peut être positive si le premier score est supérieur à un seuil d'authentification et que tous les deuxièmes scores sont inférieurs au seuil d'authentification.

En variante, un nombre entier N strictement supérieur à 1 est défini. Par exemple N est inférieur ou égal à 10. Par exemple N=2, 3 ou 5. La décision d'authentification est :
- négative si le premier score est inférieur au seuil d'authentification ;
- positive si le premier score est supérieur à un seuil d'authentification et que moins de N seconds scores sont supérieurs au seuil d'authentification ;
- négative si le premier score est supérieur à un seuil d'authentification et qu'au moins N seconds scores ou plus sont supérieurs au seuil d'authentification.

Pour les étapes 540, 550 et 560 des détails de réalisation décrits par exemple par référence à la Figure 3 (notamment étapes 330A, 330B, 340) sont utilisables.

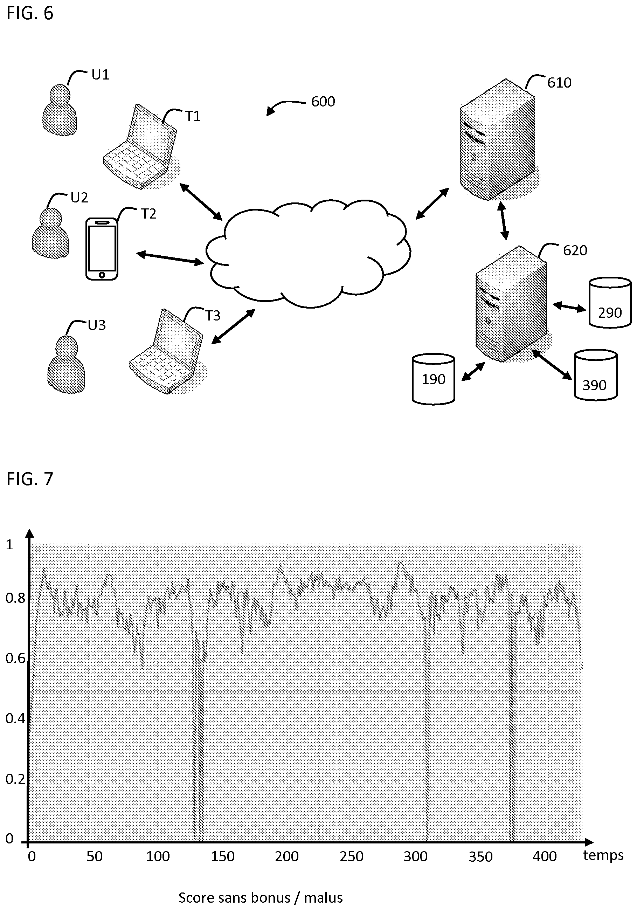

La Figure 6 représente de manière schématique un système 600 incluant un dispositif d'authentification biométrique comportementale selon un exemple de réalisation.

Le système inclut plusieurs équipements utilisateurs T1, T2, T3 utilisés par des utilisateurs U1, U2, U3 respectifs. Les équipements utilisateurs T1, T2, T3 communiquent au moyen d'une application à travers au moins un réseau de communication avec un système applicatif 610, par exemple un serveur 610 de jeux vidéo.

L'interaction avec le jeu vidéo peut se faire au moyen de l'interface utilisateur d'un des équipements utilisateurs T1, T2, T3 ou au moyen d'un équipement d'interaction dédié (non représenté) au jeu (joystick, clavier de jeu dédié, molette, console, etc).

Un dispositif 620 d'authentification biométrique comportementale est connecté de manière opérationnelle avec ce serveur 610 de jeux vidéo et comprend des moyens de mise en oeuvre d'un procédé d'authentification biométrique comportementale selon ce qui est décrit dans ce document.

Ce dispositif 620 d'authentification biométrique comportementale accède à une ou plusieurs bases de données, comprenant par exemple une base de référence 190 pour des utilisateurs de référence, une base 290 d'utilisateurs légitimes et une base temporaire 390 pour des utilisateurs à authentifier, selon ce qui a été décrit dans ce document, par exemple par référence aux figures 1 à 5.

### Applications

La solution d'authentification biométrique comportementale décrite dans ce document est utilisable par exemple pour permettre une authentification forte en continu pendant le déroulement d'un jeu vidéo de sorte à valider (éventuellement automatiquement ou après confirmation par l'utilisateur détenteur du compte utilisateur) l'exécution d'une transaction de paiement suite à une décision d'authentification positive, sans que l'utilisateur n'ai besoin de saisir de données d'authentification ou d'utiliser un équipement autre que l'équipement d'interaction (console) avec le jeu vidéo.

La solution d'authentification est utilisable également pour effectuer un contrôle parental afin de protéger les enfants, ou le déverrouillage des comptes utilisateurs sur les consoles de jeu (le compte peut se verrouiller automatiquement si le comportement n'est pas celui de l'utilisateur légitime).

### Résultats expérimentaux dans le domaine du jeu vidéo.

Des tests ont été réalisés avec un ensemble d'environ 200 à 250 caractéristiques comportementales basées uniquement sur des boutons et joystick mais sans utiliser de données brutes venant de capteurs gyroscopiques ou autres.

La longueur N des séquences d'événements peut varier afin d'obtenir des caractéristiques statistiques plus précises.

Après l'entraînement avec une forêt aléatoire avec ces caractéristiques, nous avons pu obtenir un taux d'erreur d'égalité (EER, Equal Error Rate) de seulement 0,3 %. L'EER correspond au taux d'erreur lorsque le taux de faux positifs (FAR, False Acceptance Rate) est égal au taux de faux négatifs (FRR, False Rejection Rate). Le seuil d'authentification pour les scores a été adapté pour diminuer soit le FRR (meilleure expérience utilisateur) soit le FAR (meilleure sécurité).

Il ressort qu'une seule session d'enrôlement (phase 2) peut être suffisante pour authentifier/identifier directement l'utilisateur lors d'une prochaine session de jeu mais une seconde session d'enrôlement lors de laquelle l'entraînement du modèle comportemental est répété permet de réduire tout risque.

En utilisant une fenêtre glissante sur 500 événements pour obtenir une décision finale d'authentification, il est possible d'identifier l'utilisateur très précisément et de détecter un changement d'utilisateur dans un délai d'environ 5 à 10 secondes de jeu. L'identification du nouvel utilisateur peut prendre jusqu'à 5 à 10 secondes supplémentaires. Ce temps peut être réduit en fonction des exigences de précision du dispositif d'authentification.

Le modèle comportemental de l'utilisateur peut être mis à jour avec de nouvelles données pour suivre la progression de l'utilisateur, un changement de comportement se produisant souvent lorsque l'utilisateur s'améliore au jeu.

Les modèles comportementaux deviennent également plus robustes lorsqu'ils sont entraînés sur différents modes de jeu, car les actions effectuées par l'utilisateur peuvent être différentes selon le mode de jeu. Il est toutefois possible d'authentifier un joueur à travers ces modes de jeu en partant d'un modèle comportemental obtenu pour un premier mode de jeu spécifique. Il est possible d'augmenter le seuil d'authentification lorsque le mode de jeu change.

La base des utilisateurs de référence peut également être mise à jour pour tenir compte de l'apparition de nouveaux types de comportement parmi les utilisateurs et identifier de nouveaux utilisateurs de référence ayant des modèles comportementaux discriminants. De manière générale, l'utilisation de modèles de référence pour des utilisateurs de référence permet de vérifier si le comportement de l'utilisateur à authentifier se rapproche ou non d'un de ces utilisateurs de référence. Ainsi au lieu d'utiliser uniquement le modèle comportemental de l'utilisateur légitime, on effectue une vérification a contrario sur la base des modèles de référence.

**Comparaison des indicateurs de performance d'une méthode de base, sans utilisateurs de référence, avec la méthode décrite ici utilisant des utilisateurs de référence.**

Les indicateurs de performance utilisés sont le taux de faux négatifs et le taux de faux positifs. Les expériences sont effectuées sur le même jeu de test avec les mêmes utilisateurs pour générer les gabarits biométriques pour chaque utilisateur. Pour réaliser l'expérience, on a utilisé dans les deux cas 12 utilisateurs indépendants qui ont joué pendant 2 à 3 sessions de jeu d'environ 10 minutes soit un peu plus de 4h de jeu environ. De ce fait il n'y a aucun biais entre la méthode de base et la méthode proposée si ce n'est l'utilisation d'utilisateurs de références.

La matrice de confusion obtenue pour la méthode de base est la suivante:

**[Tableau 1]**

| | Classe prédite : utilisateur légitime | Classe prédite : utilisateur non-légitime |
|---|---|---|
| Classe réelle : utilisateur légitime | 287 (Vrais Positifs) | 5 (Faux Négatifs) |
| Classe réelle : utilisateur non-légitime | 1906 (Faux Positifs) | 16043 (Vrais Négatifs) |

La matrice de confusion obtenue pour la méthode décrite dans ce document avec des utilisateurs de référence est la suivante:

**[Tableau 2]**

| | Classe prédite : utilisateur légitime | Classe prédite : utilisateur non-légitime |
|---|---|---|
| Classe réelle : utilisateur légitime | 255 (Vrais Positifs) | 37 (Faux Négatifs) |
| Classe réelle : utilisateur non-légitime | 6 (Faux Positifs) | 17943 (Vrais Négatifs) |

En comparant les deux méthodes, on obtient les ratios suivants :

**[Tableau 3]**

| | Méthode de base | Avec utilisateurs de référence |
|---|---|---|
| Ratio sur le taux de faux négatifs (%) | 1,74% | 12,85% |
| Ratio sur le taux de faux positifs (%) | 11,88% | 0,04% |

Dans la mesure où le système d'authentification cherche à apporter un niveau de sécurité plus élevé, c'est donc le taux de faux positifs qui nous intéresse principalement (un imposteur qui parvient à se faire passer pour l'utilisateur légitime).

Le taux de faux négatifs augmente de 1,74% à 12,85% : cela correspond à un facteur multiplicatif de 7,4. Cependant le taux de faux positifs diminue de 11,88% à 0,04% : cela correspond à un facteur de division de 297.

Ainsi le système avec utilisateurs de référence apporte effectivement un niveau de sécurité beaucoup plus élevé et ce, en conservant le même seuil d'authentification.

En ce qui concerne le taux de faux négatifs, on peut montrer que l'utilisation d'une pondération du score par un système de bonus/malus décrit dans ce document permet la réduction du taux de faux négatifs du fait qu'on utilise une succession temporelle de plusieurs scores.

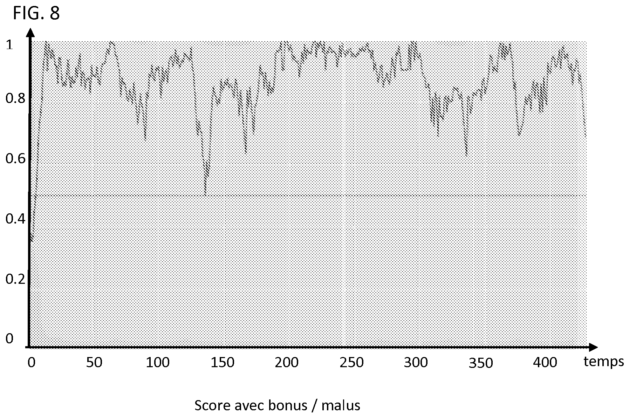

Les Figures 7 et 8 montrent la variation en fonction du temps sur une période d'environ 400 secondes du score d'authentification avec et sans bonus/malus. Ces figures illustrent l'amélioration du score (compris en 0 et 1) obtenu par pondération avec un système de bonus/malus. La ligne horizontale sur les graphiques correspond à un seuil d'authentification défini arbitrairement à 0.5 pour l'expérience.

L'évolution temporelle du score final sur une session de jeu d'un utilisateur légitime en appliquant la méthode des utilisateurs de référence sans système de bonus/malus est illustrée à la Figure 7. On observe plusieurs pics pendant lesquels la valeur du score est sous le seuil, conduisant ainsi pendant ces périodes à des faux négatifs.

En utilisant le système du bonus/malus pour pondérer le score final, on observe en Figure 8 que le score reste au-dessus du seuil d'authentification, ce qui permet d'éviter l'occurrence de faux négatif avec cette valeur du seuil d'authentification. Ce système du bonus/malus réduit donc le taux de faux négatifs. Il peut donc être utilisé pour corriger une décision d'authentification négative.

Chacune des phases 1 à 4 décrites correspond à un procédé pouvant être mis en œuvre indépendamment des autres procédés. Chacune des étapes des différentes phases décrites peut également faire partie d'un procédé d'authentification biométrique comportementale, une ou plusieurs ou toutes les étapes des différentes phases pouvant être combinées de diverses manières pour la mise en œuvre de ce procédé d'authentification biométrique comportementale.

Dans la description des différentes phases et procédés pour l'authentification biométrique comportementale, bien que les étapes soient décrites de manière séquentielle, l'homme du métier comprendra que certaines étapes peuvent être omises, combinées, réalisées dans un ordre différent et/ou en parallèle.

Une ou plusieurs ou toutes les étapes d'un ou des procédés décrits dans ce document peuvent être mises en œuvre par un logiciel ou programme d'ordinateur et/ou par du hardware, par exemple par circuit, programmable ou non, spécifique ou non.

Les fonctions, étapes et procédés décrits dans ce document peuvent être mises en œuvre par logiciel (par exemple, via un logiciel sur un ou plusieurs processeurs, pour exécution sur un ordinateur à usage général ou à usage spécifique) et/ou être mises en œuvre par du hardware (par exemple un ou plusieurs circuits électroniques, et/ou tout autre composant matériel).

La présente description concerne ainsi un logiciel ou programme d'ordinateur, susceptible d'être exécuté par un dispositif hôte (par exemple, un ordinateur) servant de dispositif de d'authentification biométrique comportementale, au moyen d'un ou plusieurs processeurs de données, ce logiciel / programme comportant des instructions pour causer l'exécution par ce dispositif hôte de tout ou partie des étapes de l'un ou des procédés décrits dans ce document. Ces instructions sont destinées à être stockées dans une mémoire du dispositif hôte, chargées puis exécutées par un ou plusieurs processeurs de ce dispositif hôte de sorte à causer l'exécution par ce dispositif hôte du procédé.

Ce logiciel / programme peut être codé au moyen de n'importe quel langage de programmation, et être sous la forme de code source, code objet, ou de code intermédiaire entre code source et code objet, tel que dans une forme partiellement compilée, ou dans n'importe quelle autre forme souhaitable.

Le dispositif hôte peut être mis en œuvre par une ou plusieurs machines physiquement distinctes. Le dispositif hôte peut présenter globalement l'architecture d'un ordinateur, incluant des constituants d'une telle architecture : mémoire(s) de données, processeur(s), bus de communication, interface(s) matérielle(s) pour la connexion de ce dispositif hôte à un réseau ou un autre équipement, interface(s) utilisateur, etc.

Dans un mode de réalisation, tout ou partie des étapes du procédé d'authentification biométrique comportementale ou d'un autre procédé décrit dans ce document sont mises en œuvre par un dispositif d'authentification biométrique comportementale doté de moyens de mise en œuvre de ces étapes de ce procédé.

Ces moyens peuvent comprendre des moyens logiciels (software) (par exemple, des instructions d'un ou plusieurs composants d'un programme) et/ou moyens matériels (hardware) (par exemple, mémoire(s) de données, processeur(s), bus de communication, interface(s) matérielle(s), etc).

Ces moyens peuvent comprendre par exemple un ou plusieurs circuits configurés pour exécuter une ou plusieurs ou toutes les étapes d'un des procédés décrits ici. Ces moyens peuvent comprendre par exemple au moins un processeur et au moins une mémoire comprenant des instructions de programme configurées pour, lorsqu'elles sont exécutées par le processeur, causer l'exécution par le dispositif d'une ou plusieurs ou toutes les étapes d'un des procédés décrits ici.

Des moyens mettant en œuvre une fonction ou un ensemble de fonctions peuvent correspondre dans ce document à un composant logiciel, à un composant matériel ou bien à une combinaison de composants matériels et/ou logiciels, apte à mettre en œuvre la fonction ou l'ensemble de fonctions, selon ce qui est décrit ci-dessous pour les moyens concernés.

La présente description concerne aussi un support d'informations lisible par un processeur de données, et comportant des instructions d'un programme tel que mentionné ci-dessus.

Le support d'informations peut être n'importe quel moyen matériel, entité ou dispositif, capable de stocker les instructions d'un programme tel que mentionné ci-dessus. Les supports de stockage de programme utilisables incluent les mémoires ROM ou RAM, les supports de stockage magnétiques tels que des disques magnétiques et des bandes magnétiques, les disques durs ou des supports de stockage de données numériques à lecture optique, ou toute combinaison de ces supports.

Dans certains cas, le support de stockage lisible par ordinateur n'est pas transitoire. Dans d'autres cas, le support d'informations peut être un support transitoire (par exemple, une onde porteuse) pour la transmission d'un signal (signal électromagnétique, électrique, radio ou optique) porteur des instructions de programme. Ce signal peut être acheminé via un moyen de transmission approprié, filaire ou non filaire : câble électrique ou optique, liaison radio ou infrarouge, ou par d'autres moyens.

Un mode de réalisation concerne également un produit programme d'ordinateur comprenant un support de stockage lisible par ordinateur sur lequel sont stockées des instructions de programme, les instructions de programme étant configurées pour causer la mise en œuvre par le dispositif hôte (par exemple un ordinateur) de tout ou partie des étapes d'un ou des procédés décrits ici lorsque les instructions de programme sont exécutées par un ou plusieurs processeurs et/ou un ou plusieurs composants matériels programmables du dispositif hôte.

## Revendications

1. Procédé d'authentification biométrique comportementale d'un utilisateur interagissant avec un système applicatif au moyen d'au moins un équipement d'interaction, le procédé comprenant
- une obtention (510) de modèles biométriques comportementaux d'utilisateurs de référence ;
- une obtention (520) d'un modèle biométrique comportemental d'un utilisateur légitime, le modèle biométrique comportemental d'un utilisateur légitime, respectivement d'un utilisateur de référence, étant configuré pour recevoir en entrée des valeurs de paramètres caractéristiques du comportement de l'utilisateur considéré lors d'actions d'interaction avec l'équipement d'interaction et générer en sortie un score représentatif d'une probabilité que le comportement représenté par les valeurs de paramètres caractéristiques d'entrée soit celui de l'utilisateur considéré;
- une obtention (530) de valeurs de paramètres caractéristiques du comportement de l'utilisateur déterminées à partir d'événements produits par des actions d'interaction de l'utilisateur avec l'équipement d'interaction;
- une détermination (540) d'un premier score par application du modèle biométrique comportemental de l'utilisateur légitime aux valeurs des paramètres caractéristiques ;
- une détermination (550) de deuxièmes scores par application respectivement de chacun des modèles biométriques comportementaux des utilisateurs de référence aux valeurs des paramètres caractéristiques ;
- une détermination (560) d'une décision d'authentification de l'utilisateur comme étant l'utilisateur légitime sur la base du premier score et des deuxièmes scores.

2. Procédé selon la revendication 1, dans lequel le premier score représente une probabilité que l'utilisateur soit l'utilisateur légitime.

3. Procédé selon la revendication 1 ou 2, dans lequel chaque deuxième score représente une probabilité que l'utilisateur soit un utilisateur de référence associé au modèle comportemental utilisé pour générer le score concerné.

4. Procédé selon l'une quelconque des revendications précédentes, dans lequel les étapes de détermination du premier score, des seconds scores et de la décision d'authentification sont répétées pour des valeurs de paramètres caractéristiques obtenues respectivement pour une succession temporelle d'intervalles de temps, le procédé comprenant
- une mise à jour de la valeur courante d'un poids pour chaque intervalle de temps, le poids étant décrémenté si un des seconds scores obtenus pour cet intervalle de temps est supérieur à un seuil d'authentification, le poids étant incrémenté si le premier score obtenu pour cet intervalle de temps est supérieur au seuil d'authentification ;
- le premier score obtenu pour un intervalle de temps étant modifié par ajout de la valeur courante du poids après mise à jour pour cet intervalle de temps, le premier score modifié étant utilisé pour la détermination de la décision d'authentification.

5. Procédé selon l'une quelconque des revendications 1 à 4, dans lequel
- la décision d'authentification est négative si le premier score est inférieur à un seuil d'authentification ;
- la décision d'authentification est négative si le premier score est supérieur à un seuil d'authentification et qu'au moins un des deuxièmes scores est supérieur au seuil d'authentification ; et
- la décision d'authentification est positive si le premier score est supérieur à un seuil d'authentification et que tous les deuxièmes scores sont inférieurs au seuil d'authentification.

6. Procédé selon l'une quelconque des revendications 1 à 4, dans lequel
- la décision d'authentification est négative si le premier score est inférieur à un seuil d'authentification ;
- la décision d'authentification est positive si le premier score est supérieur à un seuil d'authentification et que moins de N seconds scores sont supérieurs au seuil d'authentification ;
- la décision d'authentification est négative si le premier score est supérieur à un seuil d'authentification et qu'au moins N seconds scores ou plus sont supérieurs au seuil d'authentification ;
N étant un entier strictement supérieur à 1 et inférieur ou égal à 10.

7. Procédé selon l'une quelconque des revendications précédentes, dans lequel les utilisateurs de référence sont des utilisateurs différents de l'utilisateur légitime.

8. Procédé selon l'une quelconque des revendications précédentes, dans lequel les modèles comportementaux des utilisateurs de référence sont les modèles comportementaux les plus discriminants parmi un ensemble de modèles comportementaux d'utilisateurs de référence.

9. Procédé selon l'une quelconque des revendications précédentes, dans lequel le système applicatif est un système de jeux vidéo.

10. Dispositif comprenant des moyens de mise en œuvre d'un procédé selon l'une quelconque des revendications précédentes.

## Patentansprüche

1. Verfahren zum verhaltensbasierten biometrischen Authentifizieren eines Benutzers, der mit einem Anwendungssystem mittels mindestens einer Interaktionseinrichtung interagiert, das Verfahren umfassend
- ein Erhalten (510) von verhaltensbasierten biometrischen Modellen von Referenzbenutzern;
- ein Erhalten (520) eines verhaltensbasierten biometrischen Modells eines legitimen Benutzers, wobei das verhaltensbasierte biometrische Modell eines legitimen Benutzers, beziehungsweise eines Referenzbenutzers, zum Empfangen als Eingabe von Parameterwerten, die für das Verhalten des betrachteten Benutzers bei Interaktionshandlungen mit der Interaktionseinrichtung charakteristisch sind, und zum Generieren als Ausgabe einer Bewertung, die für eine Wahrscheinlichkeit repräsentativ ist, dass das durch die charakteristischen Parameterwerte der Eingabe dargestellte Verhalten dasjenige des betrachteten Benutzers ist, konfiguriert ist;
- ein Erhalten (530) von Parameterwerten, die für das Verhalten des Benutzers charakteristisch sind, die aus Ereignissen bestimmt werden, die durch Interaktionshandlungen des Benutzers mit der Interaktionseinrichtung erzeugt werden;
- ein Bestimmen (540) einer ersten Bewertung durch Anwendung des verhaltensbasierten biometrischen Modells des legitimen Benutzers auf die Werte der charakteristischen Parameter;
- ein Bestimmen (550) von zweiten Bewertungen durch jeweilige Anwendung jedes der verhaltensbasierten biometrischen Modelle der Referenzbenutzer auf die Werte der charakteristischen Parameter;
- ein Bestimmen (560) einer Authentifizierungsentscheidung des Benutzers als legitimer Benutzer auf der Grundlage der ersten Bewertung und der zweiten Bewertungen.

2. Verfahren nach Anspruch 1, wobei die erste Bewertung eine Wahrscheinlichkeit darstellt, dass der Benutzer der legitime Benutzer ist.

3. Verfahren nach Anspruch 1 oder 2, wobei jede zweite Bewertung eine Wahrscheinlichkeit darstellt, dass der Benutzer ein Referenzbenutzer ist, der dem Verhaltensmodell zugeordnet ist, das zum Generieren der betreffenden Bewertung verwendet wird.

4. Verfahren nach einem der vorstehenden Ansprüche, wobei die Schritte zum Bestimmen der ersten Bewertung, der zweiten Bewertungen und der Authentifizierungsentscheidung für charakteristische Parameterwerte wiederholt werden, die jeweils für eine zeitliche Abfolge von Zeitintervallen erhalten werden, das Verfahren umfassend
- ein Aktualisieren des aktuellen Werts einer Gewichtung für jedes Zeitintervall, wobei die Gewichtung dekrementiert wird, falls eine der für dieses Zeitintervall erhaltenen zweiten Bewertungen über einem Authentifizierungsschwellenwert liegt, wobei die Gewichtung inkrementiert wird, falls die für dieses Zeitintervall erhaltene erste Bewertung über dem Authentifizierungsschwellenwert liegt;
wobei die erste Bewertung, die für ein Zeitintervall erhalten wird, durch Hinzufügen des aktuellen Werts der Gewichtung nach Aktualisierung für dieses Zeitintervall modifiziert wird, wobei die modifizierte erste Bewertung für die Bestimmung der Authentifizierungsentscheidung verwendet wird.

5. Verfahren nach einem der Ansprüche 1 bis 4, wobei
- die Authentifizierungsentscheidung negativ ist, falls die erste Bewertung unter einem Authentifizierungsschwellenwert liegt;
- die Authentifizierungsentscheidung negativ ist, falls die erste Bewertung über einem Authentifizierungsschwellenwert liegt und mindestens eine der zweiten Bewertungen über dem Authentifizierungsschwellenwert liegt; und
- die Authentifizierungsentscheidung positiv ist, falls die erste Bewertung über einem Authentifizierungsschwellenwert liegt und alle zweiten Bewertungen unter dem Authentifizierungsschwellenwert liegen.

6. Verfahren nach einem der Ansprüche 1 bis 4, wobei
- die Authentifizierungsentscheidung negativ ist, falls die erste Bewertung unter einem Authentifizierungsschwellenwert liegt;
- die Authentifizierungsentscheidung positiv ist, falls die erste Bewertung über einem Authentifizierungsschwellenwert liegt und weniger als N zweite Bewertungen über dem Authentifizierungsschwellenwert liegen;
- die Authentifizierungsentscheidung negativ ist, falls die erste Bewertung über einem Authentifizierungsschwellenwert liegt und mindestens N zweite Bewertungen oder mehr über dem Authentifizierungsschwellenwert liegen;
N eine ganze Zahl ist, die strikt über 1 und unter oder bei gleich 10 liegt.

7. Verfahren nach einem der vorstehenden Ansprüche, wobei die Referenzbenutzer unterschiedliche Benutzer als der legitime Benutzer sind.

8. Verfahren nach einem der vorstehenden Ansprüche, wobei die Verhaltensmodelle der Referenzbenutzer die am meisten unterscheidenden Verhaltensmodelle aus einer Menge von Verhaltensmodellen von Referenzbenutzern sind.

9. Verfahren nach einem der vorstehenden Ansprüche, wobei das Anwendungssystem ein Videospielsystem ist.

10. Vorrichtung, umfassend Mittel zum Implementieren eines Verfahrens nach einem der vorstehenden Ansprüche.

## Claims

1. A method for behavioral biometric authentication of a user interacting with an application system by means of at least one interaction device, the method comprising
- obtaining (510) behavioral biometric models of reference users;
- obtaining (520) a behavioral biometric model of a legitimate user, the behavioral biometric model of a legitimate user, respectively of a reference user, being configured to receive, as input, values of characteristic parameters of the behavior of the considered user during interaction actions with the interaction device and to generate, as output, a score representative of a probability that the behavior represented by the input values of the characteristic parameter is that of the considered user;
- obtaining (530) values of characteristic parameters of the user's behavior which are determined from events produced by the user's interaction actions with the interaction device;
- determining (540) a first score by applying the behavioral biometric model of the legitimate user to the values of the characteristic parameters;
- determining (550) second scores by respectively applying each of the behavioral biometric models of the reference users to the values of the characteristic parameters;
- determining (560) a decision to authenticate the user as being the legitimate user on the basis of the first score and the second scores.

2. The method as claimed in claim 1, wherein the first score represents a probability that the user is the legitimate user.

3. The method as claimed in claim 1 or 2, wherein each second score represents a probability that the user is a reference user associated with the behavioral model used to generate the considered score.

4. The method as claimed in any one of the preceding claims, wherein the steps of determining the first score, the second scores and the decision to authenticate are repeated for characteristic parameter values respectively obtained for a temporal sequence of time intervals, the method comprising
- updating the current value of a weight for each time interval, the weight being decremented if one of the second scores obtained for this time interval is greater than an authentication threshold, the weight being incremented if the first score obtained for this time interval is greater than the authentication threshold;
- the first score obtained for a time interval being modified by adding the current value of the weight after updating for this time interval, the modified first score being used to determine the decision to authenticate.

5. The method as claimed in any one of claims 1 to 4, wherein
- the decision to authenticate is negative if the first score is below an authentication threshold;
- the decision to authenticate is negative if the first score is above an authentication threshold and at least one of the second scores is above the authentication threshold; and
- the decision to authenticate is positive if the first score is above an authentication threshold and all of the second scores are below the authentication threshold.

6. The method as claimed in any one of claims 1 to 4, wherein
- the decision to authenticate is negative if the first score is below an authentication threshold;
- the decision to authenticate is positive if the first score is above an authentication threshold and fewer than N second scores are above the authentication threshold;
- the decision to authenticate is negative if the first score is above an authentication threshold and at least N or more second scores are above the authentication threshold;
N being an integer strictly greater than 1 and smaller than or equal to 10.

7. The method as claimed in any one of the preceding claims, wherein the reference users are users different from the legitimate user.

8. The method as claimed in any one of the preceding claims, wherein the behavioral models of the reference users are the most discriminating behavioral models from among a set of reference user behavioral models.

9. The method as claimed in any one of the preceding claims, wherein the application system is a video game system.

10. A device comprising means for implementing a method as claimed in any one of the preceding claims.
